(19) Europäisches Patentamt / European Patent Office / Office européen des brevets

(11) **EP 3 617 957 A1**

(12) **EUROPEAN PATENT APPLICATION**

(43) Date of publication:
**04.03.2020 Bulletin 2020/10**

(51) Int Cl.:
*G06N 3/063* (2006.01)        *G06N 3/04* (2006.01)

(21) Application number: **18290095.1**

(22) Date of filing: **29.08.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **GrAI Matter Labs S.A.S.**
**75012 Paris (FR)**

(72) Inventor: **Reinauld, Julien**
**75012 Paris (FR)**

(74) Representative: **V.O.**
**P.O. Box 87930**
**Carnegieplein 5**
**2508 DH Den Haag (NL)**

(54) **NEUROMORPHIC PROCESSING METHOD AND UPDATE UTILITY FOR USE THEREIN**

(57)     An update utility (10) is provided for time-multiplexed updating of neural states for a plurality of neural units as a function of received input events and as a function of time. Each neural unit has stored information about its neural state, selected from (an initial state, a firing state and one or more intermediate states), in a respective memory location (12k) of a neuron state memory unit (12). The update utility comprises one or more I/O ports (101) to access the state information. The state information includes at least an indication of a static state variable and an indication of a dynamic state variable. The update utility further has inputs (102, 103) to receive an indication for a received event (input_valid_i), including an indication for a type of event (input_type_i) and to receive an indication for a weight assigned to the received event. The update utility further has an output (104) for providing an indication of a spike event. The update utility comprises one or more computational units to update the accessed state information dependent on the received indication for a type of event and the received indication for a weight of the event. The update utility, upon determining that the updated state information indicates a firing state, provides an indication of a spike event at the output (104) and further updates the accessed state information to indicate an initial state.

FIG. 2

**Description**

BACKGROUND

The present invention relates to an update utility updating neural states of a plurality of neural units in a time-multiplexed manner as a function of received input events and as a function of time.

The present invention relates to a neuromorphic processing method comprising updating in a time-multiplexed manner neural states of neural units as a function of received input events and as a function of time.

The advent of cognitive computing has proposed neural computing as an alternative computing paradigm based on the operation of human brain. Due to their inherently parallel architecture neural computing devices are capable to mitigate the Von Neuman memory bottleneck. Inspired on biological principles, neural computing devices are designed as neural units that interact with one another through synaptic connections. Contrary to their analogically operating biological counterparts, IC implementations of these artificial neural computing devices may be of a digital nature.

Digital implementations of certain aspects of these neurons give the opportunity to exploit the immense technological advances that have been achieved in several decades of digital integrated circuit design. Contrary to currently available digital processing elements, biological neurons work at very low frequencies of a few tens to a few hundred Hz. Accordingly, this would not impose a large burden on their implementation. However, designing a processing module on silicon having properties compatible to a biological system is still far from practical with state of the art technology, as a typical biological system contains billions of neurons and on average, each of those neurons has a plurality of synapses. One approach is to mimic such a complex system with a time-multiplexed design wherein a plurality of neural units share a processing facility. Since digital hardware can run orders of magnitudes faster than the speed at which biological neurons work the shared processing facility can realistically emulate neuron behavior, while this approach saves space to implement a higher density of virtual neurons and their synapses.

Spiking neural networks are characterized in that the information between neural units is exchanged as a firing event message. Emission of a firing event message (spike) indicates both that data is available, and the time interval that lapsed since the emission of a previous firing event message also indicates a data value. The length of the time-interval is indicative for the data value that is to be exchanged. In some designs a firing frequency is indicative for the data value. In other designs a length of a time interval may be indicative for the data value. In both cases a convention may prevail that the absence of an event during a time interval that exceeds a threshold time interval indicates an absence of data. This is of particular importance for array processing, in particular when sparsely filled, for example for processing data from a surveillance camera. Conventional data processing systems would require that each image element is scanned at a predetermined refresh frequency. Therewith the scanning results in a stream of data that is proportional to the number of pixels in the scanned image array and the refresh frequency. In case a spiking neural network is coupled to the image array, only neural units detecting a change in image content will transmit data to secondary neural units. And on their turn, only secondary neural units triggered by the transmitted data will itself transmit data. Therewith the computational load as well as a load of data transmission channels is substantially reduced.

WO 2017/009543 discloses a neural model for a neural unit and also proposes neural nets constructed from these neural units to implement various functional units for storage and for performing mathematical computations. The cited WO publication however fails to provide indications how to actually realize such neural nets in a manner that would have a sufficiently high operational speed and an efficient use of surface area.

SUMMARY OF THE INVENTION

It is a first object of the invention to provide an update utility for efficiently updating neural states of a plurality of neural units in a time-multiplexed manner as a function of received input events and as a function of time.

Embodiments of the update utility may be part of a neuromorphic processing module for execution of a spiking neural network.

It is a second object of the invention to provide a neuromorphic processing method comprising efficiently updating in a time-multiplexed manner neural states of neural units as a function of received input events and as a function of time.

In accordance with the first object an update utility is provided for time-multiplexed updating of neural states for a plurality of neural units as a function of received input events and as a function of time. Each neural unit has stored information about its neural state in a respective memory location of a neuron state memory unit. The neural state is one of an initial state, a firing state and one or more intermediate states. The state may be stationary, in which case it does not change in the absence of events, or it may be non-stationary, in which case the state develops also in the absence of input events. The update utility comprises one or more I/O ports to access the state information in the memory location of a selected neural unit. The state information includes at least an indication of a static state variable and an indication of a dynamic state variable.

The state information may for example include an action potential as a static state variable. The wording static is used here to indicate that such a variable may be assigned a value different from zero, without causing further changes than that. It is noted however that setting the action potential to a value exceeding a threshold value typically results in a firing or spiking of the neural unit. In that case no further change occurs to the state of the neural unit subsequent to said firing in the absence of further events. A further example of a static state variable is a setting of an operational parameter, e.g. a setting of the threshold voltage for the action potential, or the setting of a gate, which determines whether or not a particular state variable can affect an other state variable.

The state information may for example include a linear current as a dynamic state variable. If this state variable is non-zero, it will have the effect that the action potential changes linearly in time in accordance with the value of this state variable. Alternatively or in addition an exponential current may be included as a dynamic state variable. The latter as the effect that the action potential changes in time in accordance with an exponential function as specified by the value of this state variable. A gate setting as referred to above, may for example serve to selectively decouple the development of the contribution of this exponential function from the development of the action potential.

The update utility has inputs to receive an indication for a received event including an indication for a type of event and an indication for a weight assigned to the received event. As the update utility is capable of receiving an indication of a type of event, it is capable to selectively update specific aspects of the state information depending on the indicated event type. This makes it possible to update various types of state information to an extent depending on the specified weight, while requiring only a few additional bits for selection of the event type. Only a single set of bits is required to specify the weight. The event type may for example indicate that the value of the variable representing the action potential is to be changed, or that a setting of a variable specifying a linear current is to be changed.

One or more computational units are provided to update the accessed state information dependent on the received indication for a type of event and the received indication for a weight of the event.

The update utility is further capable, upon determining that the updated state information indicates a firing state to provides an indication of a spike event at an output and to further update the accessed state information to indicate an initial state.

In an embodiment the update utility is further configured to update a neural state in a first and a second computational stage. The first computational stage involves processing receipt of an input event and the second computational stage involves computing an autonomous progress of the neural state including determining whether the updated state information indicates a firing state. The second computational stage also involves providing an indication of a spike event at the output and further updating the accessed state information to indicate an initial state upon detection of the firing state. The update unit is controllable to independently perform one of the first and the second computational stage. In this way, input events can be rapidly processed and subsequently removed from a message buffer or queue from which they are taken, without having to first complete the second computational stage.

In an embodiment the update utility may have separate update units. A first one to perform the first computational stage and a second one to perform the second computational stage. This makes it possible to process an input event for a first one of the neural units while performing an integration cycle for another one of the neural units. The update units may me capable to independently access the neuron state memory unit via a respective memory port. Alternatively the update units may have time-multiplexed access to a shared memory port, such that one of the update units accesses the memory via the shared memory port, while the other one processes neural unit state data that it accessed at a previous point in time.

In an alternative embodiment of the update utility, computational units for the first computational stage and computational units for the second computational stage may share further common facilities to access the neural state information in the neuron state memory unit. In such an embodiment the update utility may comprise a computational stage selection input, the update utility being configured to perform the first computational stage in response to the computational stage selection input having a first selection value, and to perform the first computational stage in response to the computational stage selection input having a first selection value. Alternatively, the update utility may be configured to determine whether an indicated type of event is one of a plurality of predetermined types of input event and upon said determination to perform the first computational stage to update a neural state value in accordance with the determined type of input event. The update utility may further be configured to perform the second computational stage if it determines that the indicated type of event is not one of a plurality of predetermined types of input event.

The present application further provides a neuromorphic processing module for execution of a spiking neural network that comprises an update utility according to an embodiment as specified above. The neuromorphic processing module further comprises a neuron state memory unit, a synapse property memory unit, a controller, and a message buffer. In an operational state, the controller provides the update utility in a time-multiplexed manner access to respective neuron state data. The controller also enables the currently selected neural unit to distribute event messages to other neural units via the event message buffer, and/or to update a state of the selected neural unit as stored in the neuron state memory unit on the basis of event messages for said selected neural unit.

In an embodiment the update utility comprises a stationary state detection unit. The controller upon receipt of a signal from the stationary state detection unit indicative that a neural unit is in a stationary state does not select said neural unit to be updated until an event message is send to said neural unit.

According to the second object a neuromorphic processing method is provided to update in a time-multiplexed manner neural states of neural units as a function of received input events and as a function of time. The method comprises:

receiving an indication for a type of event and an indication for a weight assigned to the received event for a selected recipient neural unit;
selecting a state variable from the plurality of accessed state variables associated with the selected recipient neural unit in accordance with the indicated type of event;
updating the selected state variable in accordance with the indicated weight;
receiving an integrate indication that indicates a specific one of set of neural units that could potentially create an event (further also denoted as an indication for a selected potentially event creating neural unit);
in an integration step updating the state variables representing the neural state of the selected potentially event creating neural unit in accordance with a neural model specifying a relationship between the state variables; upon determining that the updated state information indicates a firing state, providing an indication of a spike event and further updating the variables to indicate an initial state.

In an embodiment, the steps for a selected recipient neural unit are performed independently from the steps for a selected potentially event creating neural unit.

It is noted that in a naive approach any of the neural units may be denoted as a potentially event creating neural unit. I.e. in the absence of knowledge about the state of a neural unit other than by accessing its state information any neural unit could be one that has a non-stationary state resulting in a firing event after a sufficiently long integration time. In an embodiment according to the naive approach, the neuromorphic processing method may subsequently perform the integration step for each of the neural units. As a result some of the neural units change their state, and others will not. In an improved, more efficient embodiment a list of active neural units is maintained and potentially event creating neural units are selected from this list.

A neural unit is for example added to the list of active neural units if it is determined that a dynamic state variable has a non-zero value and/or if it is determined that a static state variable exceeds a threshold value. A neural unit that has received an input event is not necessarily rendered active therewith. For example if the input event sets its action potential to a value below its threshold value, and its dynamic state variable(s) remain zero, the neural unit is no longer in the initial state, but it remains inactive and does not need to be included in the list. Accordingly, should a neural unit at present be included in the list of active neural units then it may be removed from that list if it is determined that the dynamic state variables have a zero value and that the static state variables do not exceed a threshold value. This situation may arise for example when its state variables are updated to indicate an initial state subsequent to determining a firing state. But also a formerly active neural unit may be rendered inactive if it receives (an) input event(s) having as a result that its dynamic state variables are set to zero and its static state variables are less than a threshold value.

BRIEF DESCRIPTION OF THE DRAWINGS

These and other aspects are disclosed in more detail with reference to the attached drawings. Therein

FIG. 1 schematically shows an embodiment of a neuromorphic processing module having an update utility;
FIG. 2 shows an embodiment of the update utility in more detail;
FIG. 2A shows an aspect of the update utility of FIG. 2;
FIG. 3 shows an exemplary state development of a neural unit;
FIG. 4 shows in more detail the effects of various input messages on the state development;
FIG. 5 schematically shows a further embodiment of a neuromorphic processing module having an update utility with separate update units;
FIG. 6A shows an embodiment of a first one of said update units;
FIG. 6B shows an embodiment of a second one of said update units;
FIG. 7 shows another embodiment of an update unit;
FIG. 8A to 8E show examples of parts of the update unit in FIG. 7 in more detail;
FIG. 9 shows a neuromorphic processing method;
FIG. 9A shows a step of this method in more detail;
FIG. 10A, 10B, 10C shows possible ways of specifying connectivity information to control distribution of messages.

DETAILED DESCRIPTION OF EMBODIMENTS

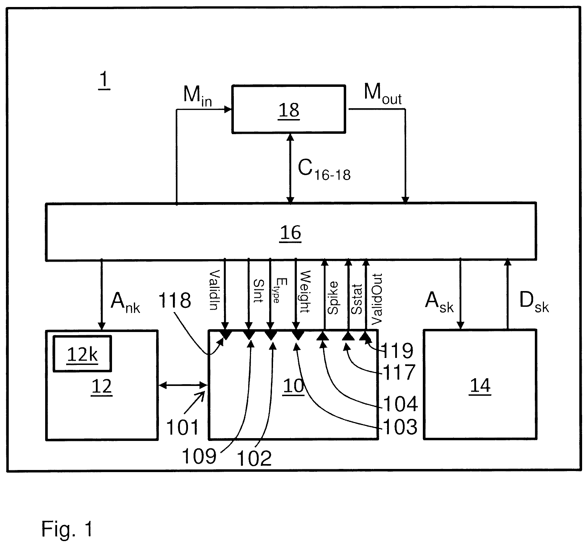

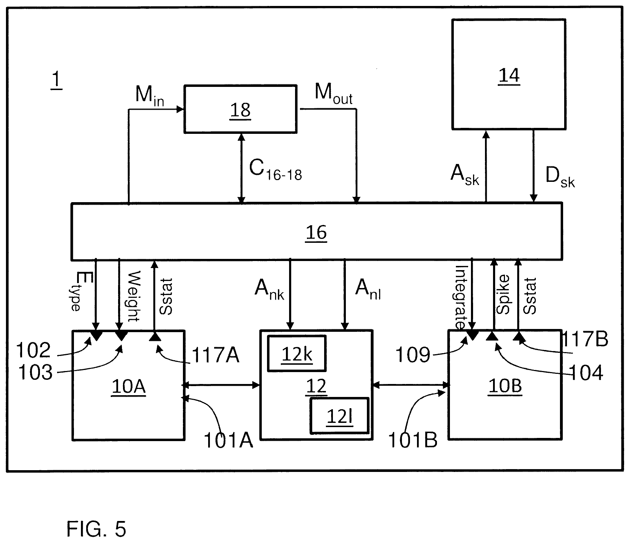

FIG. 1 schematically shows a neuromorphic processing module 1 for execution of a spiking neural network. The neuromorphic processing module 1 comprises an update utility 10, a neuron state memory unit 12, a synapse property memory unit 14, a controller 16, and a message buffer 18. In an operational state, the controller 16 in a time-multiplexed manner provides the update utility 10 access to respective neuron state data stored in a dedicated entry (e.g. 12k) for a currently selected neural unit (e.g. k) in said neuron state memory unit 12. It enables the update utility 10 to distribute event messages to other neural units via event message buffer 18, and/or to update the accessed state on the basis of event messages for the selected neural unit. In this case the update utility 10 is provided as a single update unit 10. Alternatively, as shown in FIG. 5, the update utility may be provided as a combination of update units 10A, 10B to perform various update tasks.

The controller 16 enables the update utility 10 to distribute event messages, in that upon receipt of a spike-message "Spike", it accesses synapse property memory unit 14 to obtain the synapse property data $D_{sk}$, for the neural unit k, stored at address $A_{sk}$. The synapse property data $D_{sk}$ includes an indication of one or more neural units that are designated as recipients. The synapse property data $D_{sk}$ further includes information indicative for type of event, i.e. indicative for how the recipient neural unit is to respond to the event and information indicative for a weight with which the recipient receives the event. Also the synapse property data $D_{sk}$ may include a specification for a delay with which the event message is to be delivered.

The synapse property memory unit 14 may include a combined synapse module, wherein each entry of the combined module contains all information to enable the update utility 10 to distribute event messages. Alternatively, the synapse property memory unit 14 may have a plurality of modules. For example, a first module, to be denoted as output synapse module may specify output synapse related data, e.g. including a reference to a recipient synapse and information specifying a delay with which the message is to be delivered to the recipient synapse. A second module, to be denoted as input synapse module may specify input synapse related data, like a specification of a neural unit with which it is associated, information specifying according to which event type that neural unit will be updated upon receipt and a weight to be assigned to the message. In a further embodiment an output range memory module may be provided that specifies a range of entries that are assigned for the neural unit in the output synapse module.

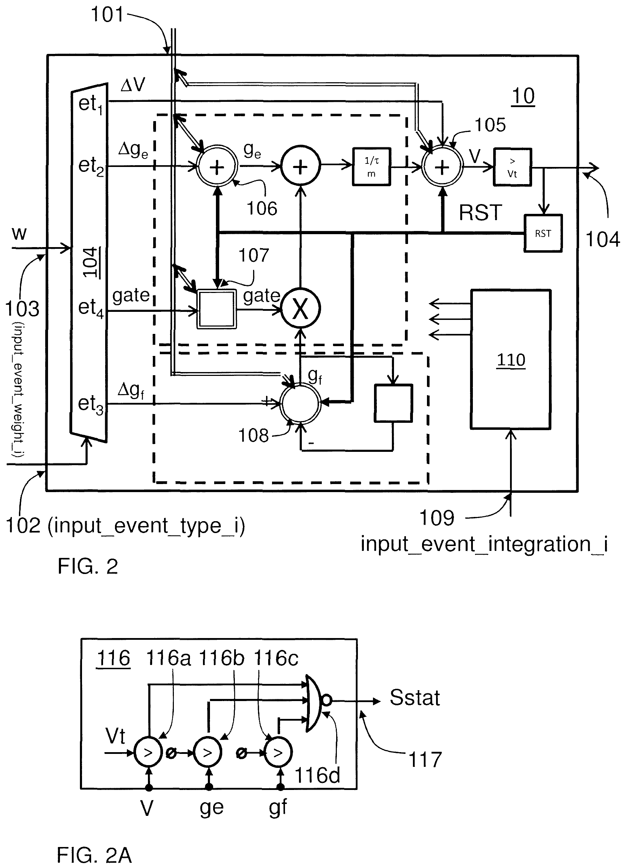

An embodiment of the update utility 10 is shown in more detail in FIG.2. The update utility 10 comprises an I/O ports 101, with which it can access neural state information specifying a neural state of a neural unit at a memory location 12k in the neuron state memory unit 12. In order to update the neural state, the update utility 10 can store the neural state information into respective state registers 105, 106, 107, 108. Once the update utility has retrieved the neural state information in these registers it represents that neural unit.

In the embodiment shown, the register 105 contains a value indicative for an action potential V. This value is comparable to the action potential in a biological neuron. The higher the action potential indicated by this register the closer the currently represented neural unit is to the state of emitting a spike at output 104. In the embodiment shown, the state of the represented neural unit includes a linearly increasing component ($g_e$) which

is stored in register 106. The state further includes a gate value (gate) which is stored in register 107 and an exponential component ($g_f$) stored in register 108.

The state of the neural unit as represented in the update utility 10 can be changed by an input synapse message. The value of the signal "input_event_type_i", also denoted as "type-signal" received at input 102 determines how the signal "input_event_weight_i", also denoted as "weight-signal" received at input 103 is used to update the state.

In the embodiment shown a first value ($et_1$) of the type-signal has the effect that the value for the action potential V stored in register 105 is modified with the value indicated by the weight-signal. A second value ($et_2$) of the type-signal has the effect that the value for the linearly increasing component $g_e$ stored in register 106 is modified with the value indicated by the weight-signal. A third value ($et_3$) has the effect that the value for the exponential component $g_e$ stored in register 108 is modified with the value indicated by the weight-signal. A fourth value ($et_4$) has the effect that the value indicated by the weight-signal is stored in the gate register.

The value $g_e$ stored in register 106 and the value $g_f$ stored in register 108, dependent on the gate value stored in register 107 represent an intrinsic dynamic behavior. In the first place, the value $g_f$ in register 108 decays exponentially with a time constant $\tau_f$. In the second place, the action potential V, stored in register 105 is modified with the linear component $g_e$ from register 106 and the exponential component $g_f$ from register 108, modified by the gate value in register 107. A separate integration input 109 may be provided as shown in FIG. 2. In response to a suitable value of an input signal "input_event_integration_i", also denoted as "integration signal" at this input 109, for example the input signal indicating the Boolean value "True" the update unit 10 performs an integration cycle or step. The integration comprises:

An update of the value gf, such that:

$$g_{f,t+\Delta t} = g_{f,t}\left(1 - \Delta t/\tau_f\right)$$

Therein $\Delta t$ is the time step since performing a previous integration step for the neural unit currently represented by the update unit 10. It is presumed that the value for this time step $\Delta t$ is substantially smaller than the value for the time constant $\tau_f$. In an embodiment the ratio $\Delta t/\tau_f$ is selected as a power of 2, i.e. $\Delta t/\tau_f = 2^{-n}$, where n is for example in the range of 3 to 10. In this case the division $\Delta t/\tau_f$ can be replaced by a shift over n-bits.

The integration further comprises an update of the value V in register 105 such that:

$$V_{t+\Delta t} = V_t + \frac{\Delta t}{\tau_m}(g_e + gate * g_f)$$

Also the ratio $\Delta t/\tau_m$ may be selected as, or approximated as a power of 2, to avoid a division operation. It is also possible to select the weights with which the values $g_e$, $g_f$ are set such that the value of this ratio is equal to 1, so that the computational step of multiplying with this ratio can be completely obviated. The multiplication gate*$g_f$ may be simplified when the gate signal is Boolean. In that case, the multiplication can be performed by a multiplexer that selects the signal gf as its input if the Boolean value is representative for the value 1 and selects the a signal representative for a value 0 if the Boolean value is representative for the value 0.

A sequencer 110 may control the integration for a time step $\Delta t$ as follows:

> a) a shift unit 111 performs the operation $\Delta g_f = -g_f * 2^{-n}$.
> b) the value for $g_f$ in register 108 is reduced with $\Delta g_f$.
> c) the new value for $g_f$ is multiplied (112) with the gate value from register 107.
> d) the result of this multiplication is added (112) to the value for ge in register 106.
> e) the result of this addition is scaled by division (113) with the time-constant $\tau_m$.
> f) the scaled value from 113 is added to the content in register 105.
> g) the updated value for V obtained therewith in register 105 is compared with a threshold value Vt.
> h) if the comparison indicates that V>Vt, a spike signal is issued at output 104, and the spike signal further activates a reset unit 115, which issues a reset signal RST to the state registers 105, 106, 107, 108, so that there content is reset to a value corresponding to the initial state of the neural unit.

It is noted that some steps may be performed in a different order or may be skipped. For example provided that the time steps $\Delta t$ are sufficiently small, it does not matter whether first the new value for $g_f$ is computed to be subsequently used in the computation of V or that the old value of $g_f$ is used for the V computation. Accordingly, the $g_f$ computation may take place later or simultaneous with the V-computation. As observed above, the multiplication in step c) may be performed by a selection operation. The scaling step in e) may be simplified as a shift operation, or may be skipped altogether. The combination of the additions in d) and the addition in f), may be replaced by a first addition step for the values of $g_e$ and V and a second addition step for the values of gate*$g_f$ and V.

As indicated above, update utility 10 updates the neural unit states in a time-multiplexed manner. Subsequently different neural unit states are selected to be updated. At each update, the state of the selected neural unit progresses with a time step.

In an embodiment, the update unit 10 comprises a stationary state detection unit 116 as shown FIG. 2A. The detection unit 116 issues a detection signal Sstat to the controller 16. If this signal indicates that a neural unit which is currently updated is in a stationary state the controller does not select said neural unit to be updated until an event is directed to that neural unit. The stationary state detection unit 116 may detect that the currently selected neural unit is in a stationary state if the dynamic state indicators (e.g. $g_f$ and $g_e$) have a value 0, and if the action potential has a value less than the threshold value. Comparators 116a-c evaluate the dynamic state and the action potential, and the detection signal Sstat is delivered by NOR gate 116d. A non-stationary neural unit may become stationary, if, as a result of the integration procedure the action potential exceeds its threshold value, and the after issuing the spike signal the state is reset to initial. Also a non-stationary neural unit may become stationary if as a result of input events, the dynamic state variables are set to 0, and the action potential does not exceed its threshold value. The state variable $g_f$ may also decay to 0 after a plurality of integration cycles.

As long as the neural unit for which the stationary state was detected does not receive input synapse data, the controller 16 does not select this neural unit to perform the integration procedure. Once input synapse data is received, for the neural unit having the stationary state, it will be scheduled for a selection to update its state in accordance with the input synapse data. If as a result the state is no longer stationary the neural unit is included again in the integration schedule.

Accordingly, the controller 16 in a time-multiplexed manner selects the non-stationary neural units for which the update unit 10 is to perform the integration procedure. The integration procedure is further time-multiplexed with an input procedure, wherein the controller 16 selects neural units that are recipient of an input event and instructs the update unit 10 to update the state of the selected neural units in accordance with the input event.

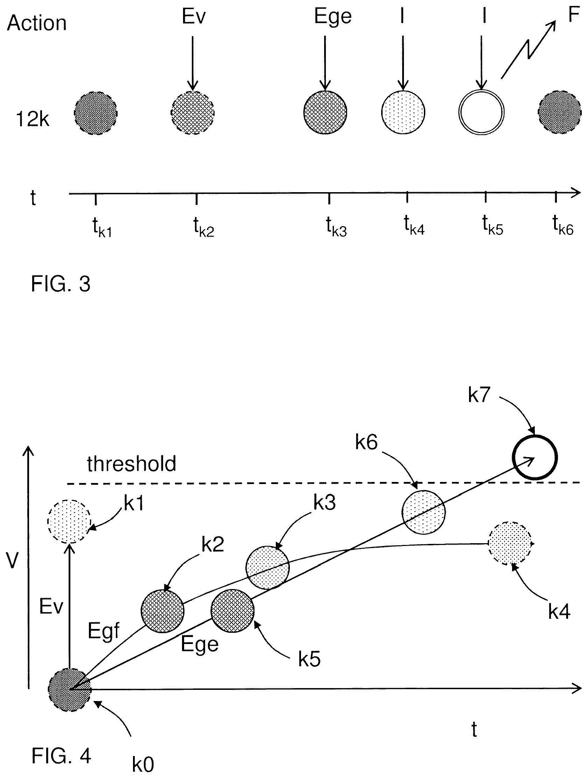

FIG. 3 shows an exemplary state evolution as a function of time t for an arbitrary neural unit k, having its neural state stored in location 12k of neuron state memory unit 12. On this timeline the points in time $tk_1$, $tk_2$,...,$tk_6$ are in chronological order. It is noted however, that the timeline is not represented on a true scale. It will be appreciated that due to the time-multiplexed operation of the neuromorphic processing module, only a fraction of the available processing time of the update utility 10 will in practice be allocated to a particular neural unit. At point in time tik, the neural unit k is in an initial, non-active state, as expressed by the dashed boundary of its icon at that point in time. The neural unit will be disregarded by the update utility 10 until an event is issued for this neural unit k that is to be received by neural unit k at point in time $t_{k2}$. At that point in time $t_{k2}$ the update utility 10 accesses the neural state for neural unit k in memory location 12k and updates the accessed neural state in accordance with the received event. In this example it is presumed that the received event is a V-event. As a result the value for the action potential of the selected neural unit k is increased (or decreased) in accordance with the weight of the V-event. It is presumed in this example that the weight of the V-event is not sufficient to cause the action potential to exceed the threshold value. Accordingly, although the neural state is no longer the initial state, as indicated by a brighter interior of the icon for the neural unit, it is still non-active (stationary), as indicated by the dashed boundary. Accordingly, neural unit k will still be disregarded by the update utility 10 until a further event is issued for this neural unit. In this example a further event is issued for this neural unit k that is to be received by neural unit k at point in time $t_{k3}$. At that point in time $t_{k3}$ the update unit 10 again accesses the neural state for neural unit k in memory location 12k and updates the accessed neural state in accordance with the received event. In this example it is presumed that the received event is a ge-event. As a result the update unit 10 updates the accessed state in memory location 12k by increasing (or decreasing) the linear current state in accordance with the ge-event. In this example it is presumed that the linear current is increased to a positive value. At this point in time the state of the action potential remains the same. The neural unit k is however from now on denoted as active (non-stationary), indicated by its solid boundary. Having this status the update utility 10 will at substantially regular intervals perform an integration step to compute the evolution of the neural state of this neural unit k. It is noted that in practice some variation may occur in the length of the time intervals. In practice this is no problem, provided that on average the integration time intervals are equal for all active neural units. The first integration cycle for neural unit k takes place at point in time $t_{k4}$. As the neural unit k has a positive value for its linear current state, its action potential is increased after the integration procedure. A second integration cycle for neural unit k takes place at point in time $t_{k5}$. As the neural unit k has a positive value for its linear current state, its action potential is again increased after the integration procedure. Dependent on the value of the linear current it may take a smaller or a larger number of integration cycles before the action potential reaches its threshold value. It is presumed that in this example the action potential has reached the threshold value at point in time $t_{k5}$. As a result the update utility 10 at this point in time embodying the neural unit k issues a fire event F and resets its state to initial, non-active as schematically shown for point in time $t_{k6}$.

Due to the fact that the update utility 10 is configured to independently perform a first computational stage involving processing receipt of an input event and a second computational stages involving computing a progress of the neural state, the input events can be handled efficiently in the first computational stage.

It is noted that in the above described embodiment neuromorphic data processing module 1 and its update utility 10 it is presumed that signal values are represented by the duration of a time-interval between subsequent spikes. To that end the linear current component of the neural unit facilitates recovery of the data value as an action potential, or a contribution thereto, as this contribution is a linear function of that time-interval.

Alternatively, signal values may be represented by the frequency of spikes, such that a higher frequency represents a higher value. In that case the spike may be transmitted as a V-event. This has the result that a higher spike frequency results in a stronger increase in the action potential.

A broad range of applications becomes available by including the exponential current as a dynamic state variable. The latter has the effect that the action potential changes in time in accordance with an exponential function as specified by the value of this state variable. A gate setting as referred to above, may for example serve to selectively decouple the development of the contribution of this exponential function from the development of the action potential.

FIG. 4 schematically shows the effect of various events received by a neural unit k. The initial state is indicated by icon k0. Upon receipt of a V-event its action potential V is changed, but the neural unit, see icon k1, remains stationary, unless the action potential is raised above the threshold. Upon receipt of an exponential event gf, the action potential will grow as a first order function to an asymptotic value, as illustrated by stages k2, k3, k4. In this example, the asymptotic value is lower than the threshold value. Upon receipt of a linear current event ge, the action potential V grows as a linear function in time as shown by icons k5, k6, k7. Furthermore gate events may be received that enable to decouple the action potential state value from the exponential value. Various events, for example of mutually different types, may be received subsequent to each other, which may reinforce or inhibit each other.

In the embodiment disclosed with reference to FIG. 1 and 2, the update utility is configured to update a neural state of a currently selected neural unit in a first and a second computational stage. The first computational stage involves processing receipt of an input event for the selected neural unit and the second computational stage involves computing an autonomous progress of the neural state of the selected neural unit. The second stage, also denoted as integration stage includes determining whether the updated state information indicates a firing state, as well as providing an indication of a spike event at the output 104. Further, if a firing state occurs in the second computational stage the accessed state information is updated to indicate an initial state. The update utility is controllable to independently perform one of the first and the second computational stage. It performs the first computational stage in response to an input event signal at input 102 and it performs the second computational stage in response to an integration request signal at input 109.

FIG. 5 shows a different embodiment of a neuromorphic processing module 1, wherein the update utility comprises a first update unit 10A and a second update unit 10B. The first update unit 10A is controllable with input signals at inputs 102, 103 to perform the first computational stage. The second update unit 10B is controllable with input 109 to perform the second computational stage and is capable of issuing a spike event at output 104 to if it is determined during an integration cycle that the action potential exceeds the threshold. Both update units can issue an output signal Sstat at output 117A, 117B respectively to indicate whether or not the neural unit that was updated, as a result of that update is in an active or in a stationary state. In the embodiment shown, the update units 10A, 10B can independently access the neuron state memory unit 12 via a respective memory port. Update unit 10A is coupled with its I/O port 101A to the first memory port and has access to an entry indicated by address $A_{nk}$ and update unit 10B is coupled with its I/O port 101B to the second memory port and has access to an entry indicated by address $A_{nl}$.

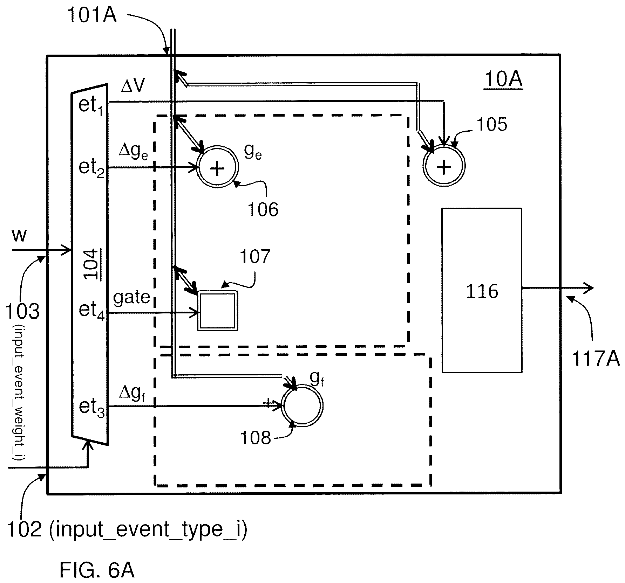

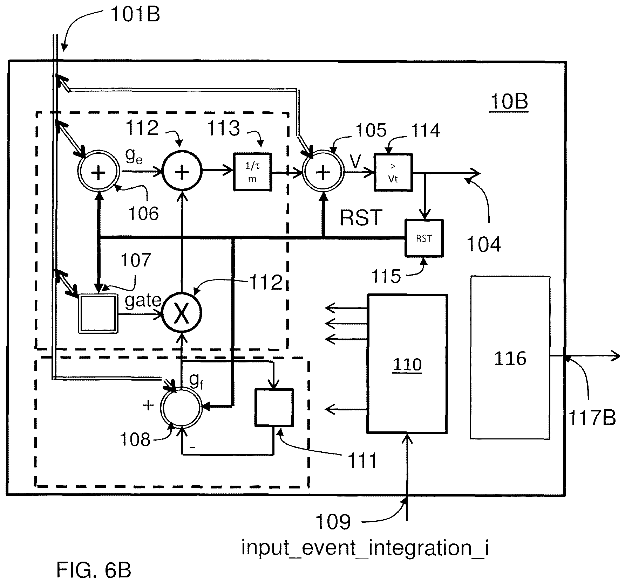

An embodiment of the first update unit 10A is schematically shown in FIG. 6A and an embodiment of the second update unit 10B is schematically shown in FIG. 6B. Parts therein corresponding to those in FIG. 2 have the same reference numeral. In the embodiment of FIG. 5, 6A and 6B, the update units 10A, 10B independently access the neuron state memory unit 12. Alternatively embodiments may be contemplated wherein the computational units of the update units 10A, 10B share common facilities to access the neural state information in the neuron state memory unit 12.

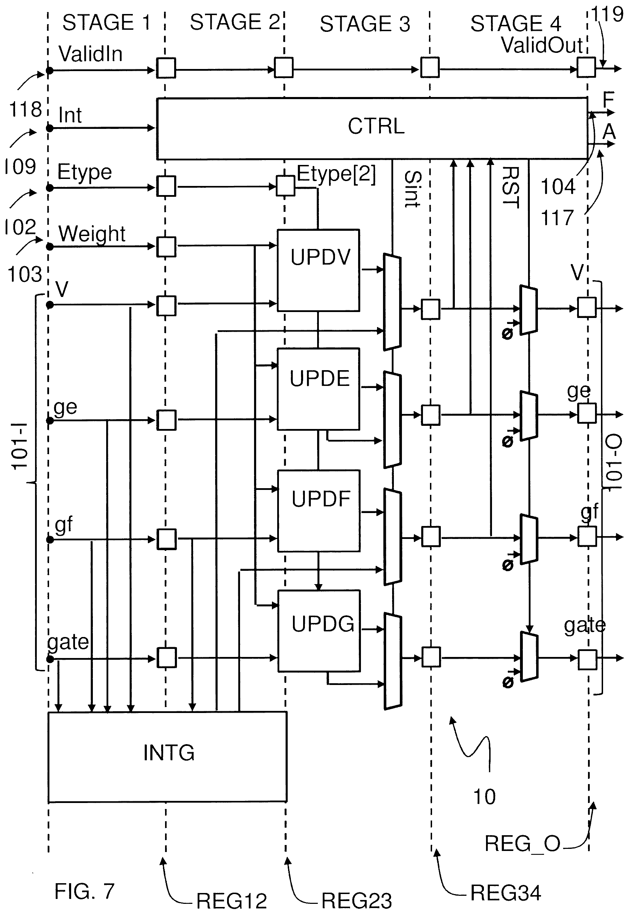

A further embodiment of an update utility 10 in the embodiment of FIG. 1 is shown in FIG. 7. The update utility 10 is configured to update a neural state, which is obtained from neural state memory unit via I/O port 101-I, in 4 internal clock cycles. In each cycle a respective pipeline stage STAGE 1, STAGE2, STAGE3, STAGE4 is executed. Boundaries between the respective stages are indicated by the dashed vertical lines. A stage is completed by storing the computed data in registers REG12, REG23, REG34 at the stage boundaries, schematically indicated as solid squares. Final results are entered into output registers REG_O. The update utility 10 has respective update modules for various neural state variables upon receipt of an event. Update module UPDV is responsible for updating the state variable for the action potential with the weight at input 103, if the signal at input 102 indicates that a received event is a V-event. Update module UPDE is responsible for updating the state variable for the linear current with the weight at input 103, if the signal at input 102 indicates that a received event is a ge-event. Update module UPDF is responsible for updating the state variable for the exponential current with the weight at input 103, if the signal at input 102 indicates that a received event is a gf-event. Update module UPDG is responsible for updating the setting for the gate in accordance with the weight at input 103, if the signal at input 102 indicates that a received event is a gate-event. The integration module INTG is to perform an integration cycle during the first and the second pipeline stage. During the third pipeline stage STAGE3, the controller CTRL uses control signal Sint to make a selection between a first input that corresponds to processing in input event, and a second input that corresponds to the results of the integration cycle. The selection is entered into the fourth stage. In this stage the controller CTRL determines with a further signal whether the values obtained from the third stage or a set of values indicative for the initial state are provided to the output register REG_O coupled to the I/O port 101-O. In the embodiment shown, the I/O port 101-O of the fourth stage STAGE4 is different from the I/O port 101-I from which the update utility 10 retrieves the data. Ports 101-I and 101-O may cooperate with an output port and an input port of memory unit 12. Alternatively these ports 101-I and 101-O may be coupled to a common I/O port 101. The controller CTRL is further provided with the output 104, to indicate an output event (F) and the output 117 to indicate whether the neural unit is in a stationary or active state (A). The embodiment of FIG. 7 further has a delay line for providing a signal ValidOut to indicate that an update cycle is completed. The controller 16 (FIG. 1) may feed the input 118 of the delay line the normally False signal ValidIn with the Boolean value True in the same clock cycle wherein the neural state data is entered. After four cycles the value True for signal ValidOut at the output 119 indicates the controller 16 that the update step is ready.

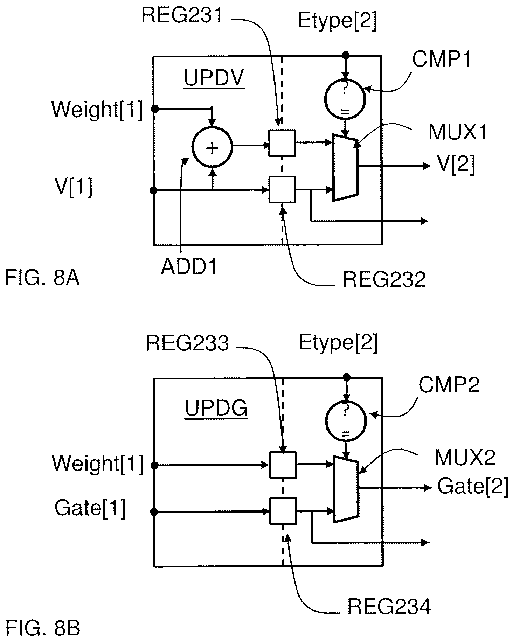

FIG. 8A shows an exemplary implementation of an update module UPDV. Therein a comparator CMP1 determines whether the input-event is a V-event. If this is the case the multiplexer MUX1 selects the value obtained from adder ADD1 as the sum of the previous action potential value V[1] and the weight Weight[1] via a register REG231 as the output V[2]. If this is not the case multiplexer MUX1 selects the original value for the action potential obtained via register REG232. Update modules UPDF and UPDE may be implemented analogously.

FIG. 8B shows an exemplary implementation of an update module UPDG. Therein a comparator CMP2 determines whether the input-event is a gate-event. If this is the case the multiplexer MUX2 selects the value Weight[1] entered via register REG233, otherwise it selects the original gate value via REG234

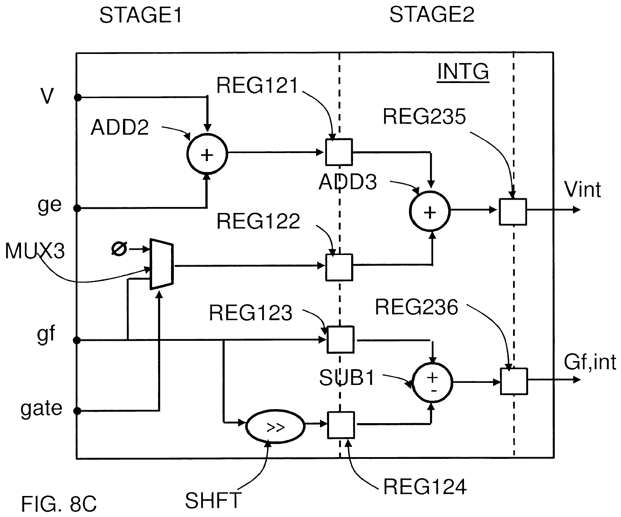

FIG. 8C shows a first example of an integrate module INTG. In stage 1, adder ADD2 computes the sum of action potential V and the linear current ge and stores the result in register REG121. Dependent on the value for the gate signal, either the value "0", or the value $g_f$ is entered into register REG122 by multiplexer MUX3. The value entered into this register can be considered as a multiplication between gf and gate, wherein the value gate has a value of 1 or 0. Alternatively, a real multiplication may be provided, wherein the gate value for example may scale the value for gf with a value in the range between 0 and 1. The value for $g_f$ is stored in register R123, and a fraction of this value is computed by application of a shift right operation with element SHFT and stored in register REG124. The result of the shift right operation stored in register REG124 is the value for gf divided by a power of 2: $gf/2^n$.

In stage 2 adder ADD3 computes the sum of the values stored in registers REG121 and REG122, and stores the result in register REG235, as the result for the action potential value Vint for this integration cycle. Furthermore subtraction element SUB1 subtracts the result in register REG124 from the value in register REG123 and stores the outcome in register REG236. An advantage of this implementation of the integrator INTG is that the integration can take place with a high clock speed.

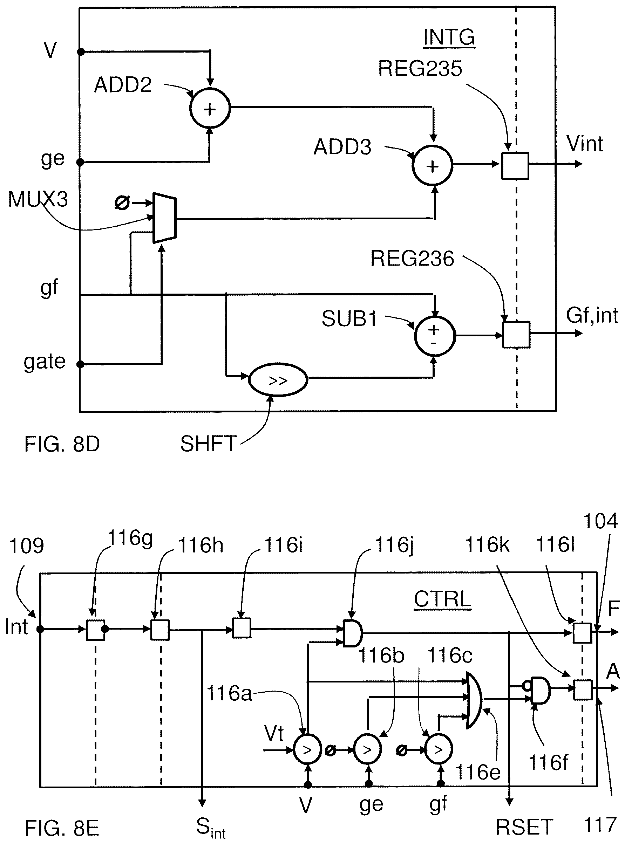

Another example of an integration module INTG is shown in FIG. 8D. Parts corresponding to those in FIG. 8C are indicated with the same reference numerals. The example of FIG. 8D differs from the example in FIG. 8C in that all computations are performed in the same stage. Adder ADD3 directly takes its inputs from adder ADD2 and multiplexer MUX3 instead of via clocked registers REG121 and REG122. Likewise subtraction element SUB1 directly obtains its input from the input of the integration module and from the output of the shifter SHFT, instead of via the via clocked registers REG123 and REG124.

An example of the controller CTRL is shown in FIG. 8E. Parts therein corresponding to those in FIG. 2A have the same reference numeral. A delay line is provided with registers 116g, 116h and 116i in which the integrate control signal Int, received at input 109 is propagated. Signal Sint obtained from input signal Int after two clock cycles is used to control the selection in stage STAGE3 between event evaluation results and integration results. The same signal delayed by one additional clock cycle is provided to AND-gate 116j, where it is ANDed with the output signal of comparator 116A that indicates whether the action potential V exceeds a threshold value V. The result of AND operation is provided to output register 116l for output 104, that indicates a firing state. The result is further provided as the reset signal RSET. It can be seen that the reset signal RSET, and hence also the signal F one clock cycle later is always False if the update utility is not in integration mode. At output 117 a "neuron active" signal A is provided if the neural unit does not fire and one or more of the conditions V > Vt, ge > 0 and gf >0 is True.

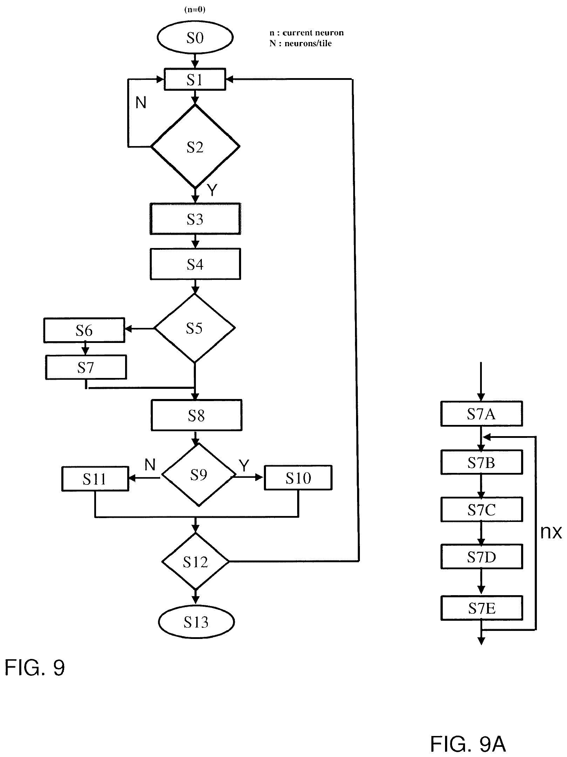

FIG. 9 schematically shows a neuromorphic data processing method according to the present invention for time-multiplexed execution of a spiking neural network comprising a plurality of neural units.

In this method a sequence of steps is repeated, wherein each repetition is associated with a respective neural unit. In step S1 a neural unit ID is generated, indicating a particular one of the neural units.

In step S2 it is verified whether an update enablement condition is complied with for the neural unit having that neural unit ID. The update enablement condition may be one of:

a) the neural unit is the recipient of an input event;
b) the neural unit is indicated in a list of active neural units. This indicates that also in the absence of input events the neural state of that neural unit will change. This can be the case if a dynamic state variable has a non-zero value and/or if a static state variable exceeds a threshold value.

If this is the case the following subsequence of steps S3-S11 is performed subject to further conditions specified below. If this is not the case, this condition is verified for a subsequent neural unit.

Upon compliance with the enablement condition neural state information is retrieved (S3) for the neural unit having that neural unit ID from an associated addressable memory entry.

If receipt of an input event resulted in the compliance with the enablement condition, then in step S4, a state variable from the plurality accessed state variables representing the state information is selected in accordance with an indication for a type of event (input_type_i) and the selected state variable is updated in accordance with the indicated weight.

If the neural unit is indicated as active then step S4 may involve an integration cycle. Therein the state variables representing the neural state of the neural unit having neural unit ID is updated in accordance with a neural model specifying a relationship between the state variables.

Subsequently, in step S5 it is determined whether the updated state information indicates a firing state. If this is the case, the state information of the neural unit is reset in step S6, so as to indicate the initial state. In that case a firing event message is issued in step S7. The firing event message is to be communicated to one or more recipient neural units in accordance with connectivity information, that may specify in addition to the identities of those neural units a delay with which the message is to be transmitted, the event type in accordance the event is to be processed, and a weight assigned to the event. For each recipient of the firing event a respective delay, event type and weight may apply.

In step S8, the updated state information representing the neural state of the neural unit is then stored in its associated addressable memory entry.

In step S9 it is determined whether or not, the status of the neural unit is active. If this is not the case (N), then in step S11 that neural unit is removed from the list of active neural units if necessary. If it is determined that the neural unit is active (Y), then in step S12 that neural unit is included in the list of active neural units if necessary. The wording "if necessary" is used to indicated that steps S11 or S12 only need to be performed if the indication on the list does not comply already with the determined activity/non-activity.

In step S10 a neural unit is for example added to the list of active neural units if it is determined that as a result of a received input event, a dynamic state variable has assumed a non-zero value and/or a static state variable has exceeded a threshold value.

In step S11 a neural unit is for example removed from the list of active neural units if it is determined that its dynamic state variables have a zero value and that its static state variables do not exceeds a threshold value. This is for example the case if in step S6 the state variables of the neural unit were updated to indicate an initial state subsequent to determining a firing state in step S5.

The connectivity information that specifies to which recipient neural units the firing event message is distributed and in which manner may be provided in various ways.

In the embodiments that are schematically shown in FIG. 1, a single synapse property memory unit 14 is provided that has a proper addressable memory location for each neural unit including all connectivity information specifying its recipients and as which type and which weight the message is to be received.

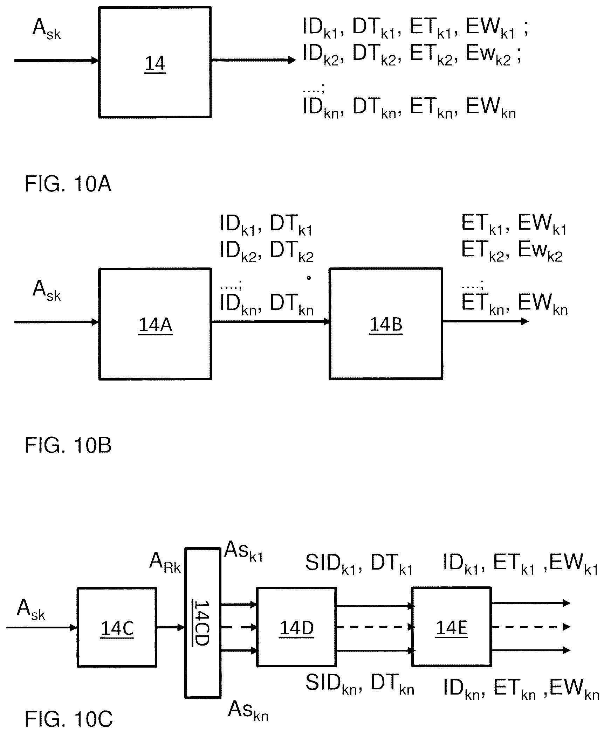

For example as schematically illustrated in FIG. 10A, location addressed with address $A_{sk}$ contains for a plurality of recipient neural units identified by IDkj, with j = 1 to n, the following information:

Delay time $DT_{kj}$
Event type $ET_{kj}$
Event weight EWkj

FIG. 10B shows an other option, wherein separate memory units 14A, 14B are provided for storing different aspects of the connectivity information.

FIG. 10C shows a still further embodiment, wherein a first memory unit 14C specifies a respective range(AsR) of addresses in a second memory unit 14D. An address generator 14CD generates the individual addresses $As_{k1},...,As_{kn}$ in the range $A_{Rk}$, that are used to address the second memory unit 14D., which contains for each of these individual addresses a reference $SID_{k1},...SID_{kn}$ to an input synapse and a specification of a delay $DT_{k1},...,DT_{kn}$ for each of these input synapses. A third memory unit 14E is used to identify the identity $ID_{k1}$, $ID_{kn}$ of the recipient neural unit as well as the weight $EW_{k1}$, $EW_{kn}$, and type $ET_{k1}$, $ET_{kn}$, to be associated with the event. It is noted that the identity $ID_{k1}$, $ID_{kn}$ of a recipient neural unit may further include a network address, in case the firing neural unit and recipient neural unit are part of mutually different neuromorphic processing modules in a network.

By way of example step S7 is described in more detail with reference to FIG. 9A for a neuromorphic processing module having its connectivity data organized as illustrated in FIG. 10C. In step S7A, the range $A_{RK}$ for neural unit with ID = k is retrieved from memory unit 14C. In step S7B, memory generator 14CD generates a first address $AS_{k1}$ in the range to address memory unit 14D. In step S7C, memory unit 14D is accessed at that address to obtain a reference $SID_{k1}$ to an input synapse and a specification of a delay $DT_{k1}$ to be imposed for delivery of the event to that input synapse. In step S7D, memory unit 14D is accessed at the address corresponding to input synapse reference $SID_{k1}$ and from the entry at this address the identity $ID_{k1}$ of the recipient neural unit as well as the weight EWki and type ETki to be associated with the event are retrieved. All data the delay $DT_{k1}$, the identity $ID_{k1}$, the weight $EW_{k1}$ and type $ET_{k1}$ is is then entered to an event queue 18. Typically the entries in the event queue are ordered according to the required arrival time (time of firing event + the delay DTkj) or the queue is maintained as a heap that at its output always has available the event with the earliest required arrival time. Steps S7B to S7E are repeated until for each of the recipients the firing event is entered into the queue 18.

It is noted that various control functions may be performed by dedicated controllers. Alternatively a controller may perform various control functions. For example in a time shared manner. A controller for performing one or more control functions may be implemented in dedicated hardware, in a programmable or configurable device or a combination thereof.

For example, the controller may be partitioned into a supervisory controller, an event controller and an integration controller. Therein the supervisory controller alternately activates the event controller and the integrate controller. At each time step the supervisory controller first activates the event controller to fetch events from the event message buffer that are to be handled in that time-step and for each of those events to instruct the update utility to update the state of the recipient neural unit for that event in accordance with the event type and event weight. Subsequently the supervisory controller activates the integration controller to perform integration cycles. In each integration cycle the update utility updates the state of each potentially active neural unit by perform an integration step. The number of integration cycles depends on the type of events received. In case of a V-event the neural unit is not rendered active, unless its action potential is raised above the threshold potential. In that case the first integration cycle after receipt of the V-event results in a spike, and a reset of the neural unit to the initial inactive state. In case a gf or a ge event is received, the number of integration cycles before reaching a spiking state will be lower for higher ge or gf values. The integration procedure may proceed until no active neural units are detected. Upon completion of the integration procedure the supervisory controller will activate the event controller again as the start of a new supervisory cycle.

In practice, the duration of the event phase and of the integration phase depends on various parameters of the neural engine, such as the number of neural units, the number of synapses, the depth of the event buffer, the clock frequency. Further this may depend on the topology of the neural network loaded into the neuromorphic processing module, the type of input received and the clock frequency with which the neuromorphic processing module is driven. By way of example, in a neuromorphic processing module supporting 1024 neural units and 4096 synapses, the duration of the event phase may vary between a dozen clock cycles to a few thousand clock cycles, and the duration of the integration phase may vary between a dozen clock cycles to a few thousand clock cycles as well.

For clarity, the computational units to update the neural unit state are shown as functional elements for each operation, such as an adder for adding values, a comparator to compare values and a logic gate to perform Boolean operations. Various alternatives are possible however. For example programmable logic may be used, in particular for performing computations that are not time-critical. Also, as indicated above, several computations may be performed in various ways, for example using a multiplexer to approximate a multiplication and using a shift right operation to perform a division by a power of 2.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

**Claims**

1. Update utility (10) for time-multiplexed updating of neural states for a plurality of neural units as a function of received input events and as a function of time, each neural unit having stored information about its neural state in a respective memory location (12k) of a neuron state memory unit (12), the neural state being one of an initial state, a firing state and one or more intermediate states, the update utility comprising one or more I/O ports (101) to access said information, said state information at least including an indication of a static state variable and an indication of a dynamic state variable, the update utility further having inputs (102, 103) to receive an indication for a received event (input_valid_i), including an indication for a type of event (input_type_i) and to receive an indication for a weight assigned to the received event, and further having an output (104) for providing an indication of a spike event, the update utility comprising one or more computational units to update the accessed state information dependent on the received indication for a type of event and the received indication for a weight of the event, wherein the update utility, upon determining that the updated state information indicates a firing state, provides an indication of a spike event at said output (104) and further updates the accessed state information to indicate an initial state.

2. The update utility according to claim 1, which is further being configured to update a neural state in a first and a second computational stage, wherein the first computational stage involves processing receipt of an input event and the second computational stage involves computing an autonomous progress of the neural state including determining whether the updated state information indicates a firing state, as well as providing an indication of a spike event at said output (104) and further updating the accessed state information to indicate an initial state upon detection of the firing state, wherein the update unit is controllable to independently perform one of the first and the second computational stage.

3. The update utility according to claim 2, comprising a respective update unit (10A, 10B) for performing the first computational stage and for performing the second computational stage.

4. The update utility according to claim 3, wherein the update units (10A, 10B) can independently access the neuron state memory unit (12) via a respective memory port.

5. The update utility according to claim 2, wherein the computational units share common facilities to access the neural state information in the neuron state memory unit (12).

6. The update utility according to claim 5, comprising a computational stage selection input, the update utility being configured to perform the first computational stage in response to the computational stage selection input having a first selection value, and to perform the first computational stage in response to the computational stage selection input having a first selection value.

7. The update utility according to claim 5, further being configured to determine whether an indicated type of event is one of a plurality of predetermined types of input event and upon said determination to perform the first computational stage to update a neural state value in accordance with the determined type of input event, the update utility further being configured to perform the second computational stage if it determines that the indicated type of event is not one of a plurality of predetermined types of input event.

**8.** A neuromorphic processing module (1) for execution of a spiking neural network comprising an update utility (10) according to one of the previous claims, and further comprising a neuron state memory unit (12), a synapse property memory unit (14), a controller (16), and a message buffer (18), wherein in an operational state, the controller (16) in a time-multiplexed manner provides the update utility (10) access to respective neuron state data for a currently selected neural unit in said neuron state memory unit (12) and enables the update utility (10) to distribute event messages to other neural units via the event message buffer (18), and/or to update a state of the selected neural unit as stored in the neuron state memory unit (12) on the basis of event messages for said selected neural unit.

**9.** The neuromorphic processing module (1) according to claim 8, wherein the update utility comprises a stationary state detection unit, and wherein the controller upon receipt of a signal from the stationary state detection unit indicative that a neural unit is in a stationary state does not select said neural unit to be updated until an event message is sent to said neural unit.

**10.** A neuromorphic processing method comprising updating in a time-multiplexed manner neural states of neural units as a function of received input events and as a function of time, the neural state being selected from at least an initial state, a firing state and one or more intermediate states, and being represented by neural state information with a plurality of neural state variables, at least including a static state variable and a dynamic state variable, the method comprising:

> receiving an indication for a type of event (input_type_i) and an indication for a weight (weight) assigned to the received event for a selected recipient neural unit;
> selecting a state variable from the plurality of accessed state variables associated with the selected recipient neural unit in accordance with the indicated type of event;
> updating the selected state variable in accordance with the indicated weight;
> receiving an integrate indication for a selected potentially event creating neural unit;
> in an integration step updating the state variables representing the neural state of the selected potentially event creating neural unit in accordance with a neural model specifying a relationship between the state variables;
> upon determining that the updated state information indicates a firing state, providing an indication of a spike event and further updating the variables to indicate an initial state.

**11.** The method according to claim 10, wherein the steps for a selected recipient neural unit are performed independently from the steps for a selected potentially event creating neural unit.

**12.** The method according to claim 11, further comprising selecting a potentially event creating neural unit from a list of active neural units.

**13.** The method according to claim 12, wherein a neural unit is added to the list of active neural units if it is determined that a dynamic state variable has a non-zero value and/or if it is determined that a static state variable exceeds a threshold value.

**14.** The method according to claim 12 or 13, wherein a neural unit is removed from the list of active neural units if it is determined that the dynamic state variables have a zero value and that the static state variables do not exceeds a threshold value.

**15.** The method according to claim 12, 13 or 14, wherein a neural unit is removed from the list of active neural units when updating the variables to indicate an initial state subsequent determining a firing state.

Fig. 1

FIG. 2

FIG. 2A

Action     Ev     Ege     I     I     F

12k

t     $t_{k1}$     $t_{k2}$     $t_{k3}$     $t_{k4}$     $t_{k5}$     $t_{k6}$

FIG. 3

threshold

k7

k6

k1

k3

V

k2

Ev

Egf

Ege

k4

k5

t

FIG. 4   k0

FIG. 5

FIG. 6A

FIG. 6B

FIG. 7

REG231 Etype[2] CMP1

UPDV

Weight[1]

V[1]

MUX1

V[2]

ADD1 REG232

FIG. 8A

REG233 Etype[2] CMP2

UPDG

Weight[1]

Gate[1]

MUX2

Gate[2]

REG234

FIG. 8B

STAGE1                                      STAGE2

FIG. 8C

FIG. 8D

FIG. 8E

(n=0)

S0

n : current neuron
N : neurons/tile

S1

N

S2

Y

S3

S4

S5

S6

S7

S8

N        S9        Y

S11                S10

S12

S13

FIG. 9

S7A

S7B

S7C

S7D

S7E

nx

FIG. 9A

$A_{sk}$ → [ 14 ] → $ID_{k1}, DT_{k1}, ET_{k1}, EW_{k1}$ ;
$ID_{k2}, DT_{k2}, ET_{k2}, Ew_{k2}$ ;
....;
$ID_{kn}, DT_{kn}, ET_{kn}, EW_{kn}$

FIG. 10A

$ID_{k1}, DT_{k1}$           $ET_{k1}, EW_{k1}$
$ID_{k2}, DT_{k2}$           $ET_{k2}, Ew_{k2}$

$A_{sk}$ → [ 14A ] → ....;  → [ 14B ] → ....;
$ID_{kn}, DT_{kn}$           $ET_{kn}, EW_{kn}$

FIG. 10B

$A_{Rk}$   $As_{k1}$   $SID_{k1}, DT_{k1}$   $ID_{k1}, ET_{k1}, EW_{k1}$

$A_{sk}$ → [ 14C ] → [ 14CD ] → [ 14D ] → [ 14E ] →

$As_{kn}$   $SID_{kn}, DT_{kn}$   $ID_{kn}, ET_{kn}, EW_{kn}$

FIG. 10C

Europäisches
Patentamt

European
Patent Office

Office européen
des brevets

## EUROPEAN SEARCH REPORT

**Application Number**

EP 18 29 0095

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/089557 A1 (KUMAR RAGHAVAN [US] ET AL) 29 March 2018 (2018-03-29) <br> * paragraph [0023] - paragraph [0054] * <br> * figures 1A, 1B, 3, 3A, 3B * <br> ----- | 1-15 | INV. <br> G06N3/063 <br> G06N3/04 |
| X | US 2018/174041 A1 (IMAM NABIL [US] ET AL) 21 June 2018 (2018-06-21) <br> * paragraphs [0026] - [0027], [0032], [0033], [0037] - [0041], [0055], [0168] * <br> * figures 2A, 2B, 2C * <br> ----- | 1-3,5, 8-15 | |

**TECHNICAL FIELDS SEARCHED (IPC)**

G06N

The present search report has been drawn up for all claims

| Place of search | Date of completion of the search | Examiner |
|---|---|---|
| The Hague | 21 February 2019 | Theissing, Simon |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 29 0095

This annex lists the patent family members relating to the patent documents cited in the above-mentioned European search report.
The members are as contained in the European Patent Office EDP file on
The European Patent Office is in no way liable for these particulars which are merely given for the purpose of information.

21-02-2019

| Patent document cited in search report | | Publication date | Patent family member(s) | | Publication date |
|---|---|---|---|---|---|
| US 2018089557 | A1 | 29-03-2018 | US 2018089557 A1 | | 29-03-2018 |
| | | | WO 2018057226 A1 | | 29-03-2018 |
| US 2018174041 | A1 | 21-06-2018 | EP 3340121 A1 | | 27-06-2018 |
| | | | JP 2018136919 A | | 30-08-2018 |
| | | | US 2018174041 A1 | | 21-06-2018 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017009543 A